(19) Europäisches Patentamt
European Patent Office
Office européen des brevets

(11) **EP 3 666 517 B1**

(12) **EUROPEAN PATENT SPECIFICATION**

(45) Date of publication and mention
of the grant of the patent:
**05.01.2022   Bulletin 2022/01**

(51) Int Cl.:
***B32B 5/18*** *(2006.01)*      ***C09K 3/18*** *(2006.01)*

(21) Application number: **17921219.6**

(86) International application number:
**PCT/JP2017/029163**

(22) Date of filing: **10.08.2017**

(87) International publication number:
**WO 2019/030907 (14.02.2019 Gazette 2019/07)**

(54) **ANTIFOULING STRUCTURE AND AUTOMOBILE COMPONENT PROVIDED WITH SAID ANTIFOULING STRUCTURE**

BEWUCHSHEMMENDE STRUKTUR UND AUTOMOBILTEIL MIT DIESER BEWUCHSHEMMENDEN STRUKTUR

STRUCTURE ANTISALISSURE ET COMPOSANT D'AUTOMOBILE MUNI DE LADITE STRUCTURE ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.06.2020   Bulletin 2020/25**

(73) Proprietor: **Nissan Motor Co., Ltd.**
**Yokohama-shi, Kanagawa 221-0023 (JP)**

(72) Inventors:
• **NOGUCHI, Yuji**
**Atsugi-shi**
**Kanagawa 243-0123 (JP)**
• **KOBAYASHI, Ryota**
**Atsugi-shi**
**Kanagawa 243-0123 (JP)**
• **MURAKAMI, Ryou**
**Atsugi-shi**
**Kanagawa 243-0123 (JP)**

(74) Representative: **Hoefer & Partner Patentanwälte mbB**
**Pilgersheimer Straße 20**
**81543 München (DE)**

(56) References cited:
EP-A1- 3 470 222          WO-A1-2008/120505
WO-A1-2010/028752     WO-A1-2014/012052
WO-A1-2015/155830     WO-A1-2017/013810
JP-A- 2013 139 492        JP-A- 2014 509 959
JP-A- 2015 214 072        JP-A- 2017 001 363
JP-A- 2017 001 363

**Description**

TECHNICAL FIELD

The present invention relates to an antifouling structure including a microporous layer retaining an antifouling liquid. More particularly, the present invention relates to an antifouling structure which is capable of achieving both retainability of the antifouling liquid of the microporous layer and feedability of the antifouling liquid onto the surface and in which an antifouling film exhibiting self-repairability over a long term is formed, and relates to an automobile component including such antifouling structure.

BACKGROUND ART

Conventionally, there are some antifouling structures having slick surfaces exhibiting an antifouling property.

For example, Patent Document 1 discloses a water-repellent article having a repellent material such as a fluorine-based compound or a silicone-based compound impregnated into voids of a void film.

Further, it is described therein that the water-repellent article is capable of maintaining excellent water repellency and water lubrication property (droplet slidability) over a long term, because the water-repellent material is seeped out from an interior of a void layer and constantly fed to the surface region, even when the water-repellent material present on the surface is damaged or removed due to exposure to sunlight or rainwater, or due to abrasion caused by wiping off dirt and the like.

Patent document 2 teaches a method of preparing an article having a slippery surface, which includes providing a metal-containing surface, chemically modifying the metal-containing surface to roughen the metal-containing surface, and disposing a lubricating layer on the roughened metal-containing surface, wherein the lubricating layer is substantially stabilized on the roughened metal-containing surface.

Patent document 3 relates to an antifouling structure having excellent antifouling performance and sliding resistance, and a method for producing the same. Disclosed is an antifouling structure containing: a porous layer formed on a base material and made of a porous body, and lubricating oil held in the holes of the porous body. The porous body includes: ceramic fine particles and a binder being of material different from the material of the ceramic fine particles.

Patent document 4 teaches an antifouling structure, which includes a porous structural layer and a non-volatile liquid in pores and/or on a surface of the porous structural layer. The porous structural layer includes a modified portion at least at a surface part of the porous structural layer, and the elemental ratio of fluorine to silicon (F/Si) in the surface part is within the range of 3 to 50.

Patent document 5 discloses a high durability anti-fouling structure provided with a porous base material, which has multiple pores on the surface and internally and for which surface roughness (Ra) is 400 nm or less; and a liquid impregnated in the porous base material. The difference in surface energy between the porous base material and the liquid is 10 mJ/m2 or less. The pore diameter (D) of the pores in the porous base material is 10 nm $\leq$ (D) $\leq$ 400 nm. The nanoindentation elastic modulus of the porous base material is 20 Gpa or more. The surface free energy of the impregnated liquid is 20 mJ/m$^2$ or less and the surface free energy of the porous base material is 20 mJ/m$^2$ or less. The viscosity of the impregnated liquid at 0°C is 160 mm2/s or less. A car part comprising such a high durability anti-fouling structure.

CITATION LIST

Patent Document

Patent Document 1: International Publication WO 2008/120505

Patent Document 2: WO 2014/012052 A1

Patent Document 3: JP 2017-001363 A

Patent Document 4: EP 3 470 222 A1

Patent Document 5: WO 2015/155830 A1

SUMMARY OF INVENTION

Technical Problem

However, while with the antifouling structure disclosed in Patent Document 1, affinity between the microporous layer and the water-repellent material is high and the water-repellent material can be retained, the water-repellent material in the interior of the microporous layer is not readily fed onto the surface of the microporous layer so that the water-repellent material cannot be fully utilized and the water repellency may be deteriorated.

Inversely, when the affinity between the microporous layer and the water-repellent material is low, it is not possible to retain a sufficient amount of the water-repellent material.

The present invention is made in view of the aforementioned problem of the conventional art, and the object thereof is to provide an antifouling structure which is capable of achieving both feedability of the antifouling liquid onto the surface of the antifouling structure and retainability of the antifouling liquid of the antifouling structure and in which an antifouling film exhibiting self-repairability over a long term is formed on the surface, and also to provide an automobile component including such antifouling structure.

Solution to Problem

As a result of intensive studies conducted for achieving the foregoing object, the inventors of the present invention have come to complete the present invention by finding that the antifouling liquid in the interior of the microporous layer can be easily fed onto the surface by providing a liquid retention part and a liquid extrusion part in the thickness direction of the microporous layer, the liquid retention part and the liquid extrusion part exhibiting different affinity from each other with the antifouling liquid, and appropriately setting the film thickness of the liquid retention part on the surface side exhibiting higher affinity with the antifouling liquid.

That is, the antifouling structure according to the present invention, which is defined in the appended claims, includes an antifouling liquid and a microporous layer, and the antifouling liquid is retained on a surface and in an interior of the microporous layer.

Further, the antifouling liquid is a hydrocarbon-based oil or a silicone-based oil; the microporous layer includes, on the surface side thereof, a liquid retention part and, in the interior thereof, a liquid extrusion part exhibiting lower affinity with the antifouling liquid than the liquid retention part; and the film thickness of the liquid retention part is 1/100 to 1/50 of the film thickness of the liquid extrusion part.

Further, the automobile component according to the present invention includes the antifouling structure.

Furthermore, an average opening diameter (D) of the microporous layer is 10 nm to 400 nm.

Advantageous Effects of Invention

The present invention can provide the antifouling structure which is capable of achieving both feedability of the antifouling liquid onto the surface of the antifouling structure and retainability of the antifouling liquid and in which the antifouling film exhibiting self-repairability over a long term can be formed on the surface thereof, since the liquid extrusion part exhibiting appropriately low affinity with the antifouling liquid is provided in the interior of the microporous layer that retains the antifouling liquid.

BRIEF DESCRIPTION OF DRAWINGS

Fig. 1 is a schematic perspective view showing an example of an antifouling structure of the present invention; and
Fig. 2 is a schematic sectional view taken along line A-A' of the antifouling structure shown in Fig. 1.

DESCRIPTION OF EMBODIMENTS

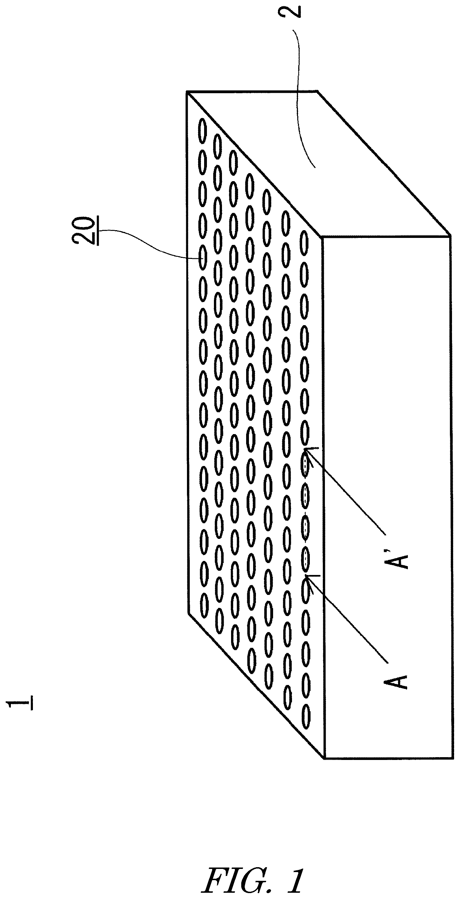

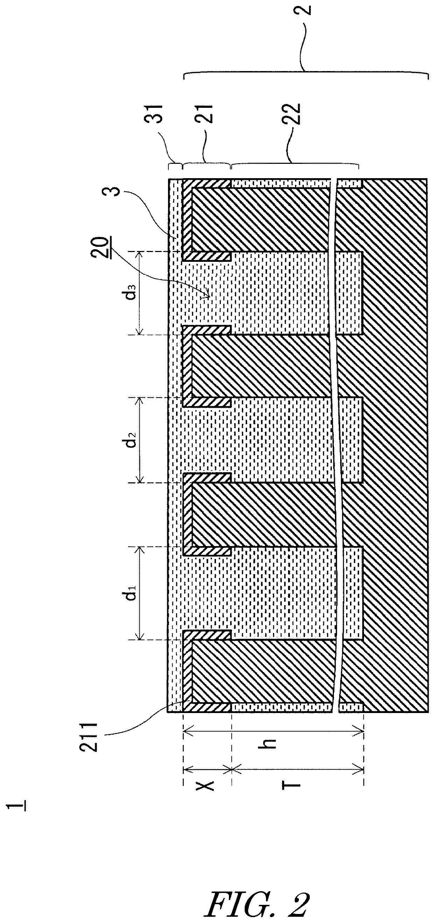

The antifouling structure of the present invention will be described in detail. Fig. 1 shows a perspective view of the antifouling structure of the present invention. Moreover, Fig. 2 shows a schematic sectional view thereof taken along line A-A'. In Fig. 1 and Fig. 2, 1 is the antifouling structure, 2 is a microporous layer, 20 is a micropore, 21 is a liquid retention part, 22 is a liquid extrusion part, 211 is a surface modified layer, 3 is an antifouling liquid, and 31 is an antifouling film.

The antifouling structure of the present invention includes: the microporous layer having minute micropores; and the antifouling liquid covering over the surface of the microporous layer. The antifouling liquid is retained in the micropores of the microporous layer and seeps out onto the surface of the microporous layer, thereby forming the antifouling film on the surface of the antifouling structure.

Microporous Layer

The microporous layer 2 includes the liquid retention part on the surface side thereof, and includes in the interior thereof the liquid extrusion part 22 exhibiting lower affinity with the antifouling liquid 3 than the liquid retention part.

The microporous layer 2 has the liquid extrusion part 22 therein, and the liquid extrusion part 22 exhibits lower affinity with the antifouling liquid 3 than the liquid retention part 21. Therefore, the antifouling liquid 3 retained in the micropores 20 of the microporous layer can easily move from the liquid extrusion part 22 in the interior of the microporous layer 2 to the liquid retention part 21 on the surface side.

And, the antifouling liquid 3 is fed to the liquid retention part 21 on the surface side of the microporous layer and the antifouling liquid 3 is spread to wet the entire surface of the microporous layer 2 by the liquid retention part 21 exhibiting high affinity with the antifouling liquid. Thereby, the antifouling film 31 having self-repairability is formed on the surface so that the antifouling property can be improved.

The film thickness (X) of the liquid retention part is 1/100 to 1/50 of the film thickness (T) of the liquid extrusion part.

When the film thickness (X) of the liquid retention part is less than 1/100 of the film thickness (T) of the liquid extrusion part, the antifouling liquid 3 does not readily enter the micropores 20 of the microporous layer 2, so that the antifouling liquid retention amount of the microporous layer 2 is decreased and depletion of the antifouling liquid 3 occurs at an early stage.

Further, when exceeding 1/50, the film thickness of the liquid extrusion part is thin and the force for repelling and extruding the antifouling liquid from micropores is weakened. Thus, the antifouling liquid is not fed onto the surface of the microporous layer, and the antifouling liquid retained in the microporous layer cannot be fully utilized.

The liquid retention part can be formed by modifying the microporous layer with a conventionally known silane coupling agent. An example of the silane coupling agent may be spacer-type alkylsilane having a long-chain alkyl group with the carbon number of 10 to 15 such as dodecylsilane.

The affinity between the liquid retention part and the antifouling liquid is increased by the use of the spacer-type silane coupling agent, thereby improving the wettability and the retainability. Further, the spacer-type silane coupling agent is highly hydrophobic and does not readily enter the micropores of the microporous layer of a metal oxide or the like exhibiting no water repellency, so that it is possible to form the liquid extrusion part.

When the microporous layer is not readily be wet by the spacer-type silane coupling agent, the liquid retention part can be formed by applying a pressure so as to introduce the silane coupling agent into the micropores.

Assuming that the micropores of the microporous layer are capillaries, the depth (H) of the liquid which enter the micropores is expressed by the following Formula (1).

$$H = 2T\cos\theta / \rho g r \qquad \text{Formula (1)}$$

where, in the Formula (1), H represents the depth of the liquid entered, T represents the surface tension, $\theta$ represents the contact angle, $\rho$ represents the liquid density, g represents the gravitational acceleration, and r represents the inside diameter (radius) of the pore.

While the liquid cannot enter the capillaries when $\theta \geqq 90°$, the liquid can be introduced into the capillaries by applying a pressure.

The film thickness of the liquid retention part can be adjusted with the surface modification conditions such as the surface modifying time of the microporous layer, the pressure applied at the time of surface modification, and wiping off the surface modifier with cloth or the like in addition to the diameter of the opening of the microporous layer.

The film thickness of the liquid retention part can be checked by performing an elementary analysis of the microporous layer.

For example, when the antifouling liquid is hydrocarbon-based oil or silicone-based oil, carbon existing in the microporous layer as an element for increasing affinity with the antifouling liquid, for example, can be detected by performing an elemental analysis (target elements: carbon, oxygen, silicon) by X-ray photoelectron spectroscopy (XPS).

Specifically, the elementary analysis is performed by the X-ray photoelectron spectroscopy while etching the microporous layer using an argon gas so as to calculate carbon concentration in the layer thickness (depth) direction, and it can be considered that the liquid retention part is formed to a range where the carbon concentration at a certain position in the layer thickness (depth) direction is 3 mol/% or more.

In addition, it is possible to confirm that the micropores of the microporous layer are modified by an alkylsilane-based surface modifier such as an alkyl group or an alkylsilyl group to form the liquid retention part by using time-of-flight secondary ion mass spectrometry, for example.

It is preferable for the difference between the surface free energy of the liquid retention part and the surface free energy of the antifouling liquid to be 10 mJ/m$^2$ or less.

When the difference in the surface free energies of the liquid retention part and the antifouling liquid is 10 mJ/m$^2$ or less, the affinity between the liquid retention part and the antifouling liquid can be improved. This makes it possible to spread the antifouling liquid to wet the entire surface of the microporous layer and to improve the antifouling liquid retention amount of the microporous layer.

Therefore, the antifouling film can be self-repaired over a long term, thereby achieving excellent durability.

Further, it is preferable for the difference between the surface free energy of the liquid extrusion part and the surface free energy of the antifouling liquid to be 30 mJ/m$^2$ or more and 200 mJ/m$^2$ or less.

When the difference in the surface free energies of the liquid extrusion part and the antifouling liquid is 30 mJ/m$^2$ or more, the liquid extrusion part appropriately repels and extrudes the antifouling liquid toward the liquid retention part, thereby making it easy to feed the antifouling liquid onto the surface of the microporous layer. When the difference exceeds 200 mJ/m$^2$, the antifouling liquid does not readily permeate the liquid retention part so that the antifouling liquid retention amount may be decreased.

Measurement of Surface Free Energy

The surface free energy inside the micropores of the microporous layer cannot be measured directly. However, it can be measured by dropping a liquid with a known surface free energy on a smooth surface of a material with the same composition and then measuring the contact angle thereof.

In the present invention, the surface free energy was acquired by dropping water and diiodomethane on a smooth base material and measuring the contact angle thereof by using the Owens-Wendt method.

It is preferable for the micropore volume of the microporous layer to be 5% to 60%. When the micropore volume is less than 5%, the antifouling liquid retention amount is small and depletion of the antifouling liquid easily occurs so that the antifouling film may not be able to be formed over a long term. When the micropore volume exceeds 60%, strength of the microporous layer is reduced and abrasion resistance of the microporous layer may be deteriorated accordingly.

The micropore volume can be adjusted with an amount of a phase separation agent and an amount of a catalyst at the time of forming the microporous layer. Further, the micropore volume can be measured by a gas absorption method using nitrogen (N$_2$) or the like, mercury porosimetry, or the like.

It is preferable for the thickness of the microporous layer to be 50 to 400 nm. When the thickness of the microporous layer is less than 50 nm, the antifouling liquid retention amount becomes small so that the durability of the antifouling structure may be deteriorated. When the thickness exceeds 400 nm, a crack may be easily generated and a haze value may be increased as well.

The thickness of the microporous layer can be adjusted with the dilution ratio (viscosity) of the coating solution of the microporous layer, coating speed thereof, and the like.

An average opening diameter (D) of the microporous layer is 10 nm to 400 nm.

When the average opening diameter is less than 10 nm, it becomes difficult to have the surface modifier such as a silane coupling agent entered the micropores, for example, so that it may become difficult for the hydrocarbon-based oil or the silicone-based oil to be retained.

When the average opening diameter exceeds 400 nm, the haze values may be increased due to Rayleigh scattering or the like and total light transmittance may be deteriorated.

For the average opening diameter (D), the average value of diameters of respective circles (for example, indicated by reference signs d1 to d3 in Fig. 2), which is acquired by observing the openings on the surface from the above the microporous layer by a scanning electron microscope (SEM) and converting each of the openings to a circle having the same area by image analysis, can be employed.

The average opening diameter (D) of the microporous layer can be adjusted with the time immediately after coating constituent materials of the microporous layer on the base material until heat-drying at the time of preparing the microporous layer or with the applied film thickness at the time of preparing the microporous layer, for example.

Specifically, by extending the time until performing heat-drying after coating or by increasing the applied film thickness at the time of preparing the microporous layer, the average opening diameter (D) of the microporous layer can be further increased.

The shape of the micropores of the microporous layer only has to be able to retain the antifouling liquid. The shape can be such that a plurality of voids are randomly arranged in the three-dimensional directions and those voids communicate to each other, besides a cylindrical shape or the like having an opening on the surface of the microporous layer. However, it is preferable to arrange a plurality of voids randomly in the three-dimensional directions. When the shape of the micropores is such that the voids are randomly arranged in the three-dimensional directions, the mechanical strength can be increased.

While the materials for forming the microporous layer are not specifically limited, it is preferable to employ an inorganic material from the viewpoint of improving the sliding resistance of the microporous layer and improving the durability of the antifouling structure.

As the inorganic material, for example, besides simple oxides, such as silicon oxide, aluminum oxide, magnesium oxide, titanium oxide, cerium oxide, niobium oxide, zirconium oxide, indium oxide, tin oxide, zinc oxide, and hafnium oxide, a complex oxide, such as barium titanate, and non-oxides, such as silicon nitride and magnesium fluoride, glass or the like can be employed. A one type of those inorganic materials may be used alone, or two or more types of those materials may be used in combination.

Among those, silicon oxide, aluminum oxide, titanium oxide, indium oxide, tin oxide, and zirconium oxide are preferable, because the light transparency thereof is excellent.

Antifouling Liquid

The antifouling liquid has water repellency and/or oil repellency, which forms the antifouling film on the surface of the microporous layer to repel foreign matters such as water, oil, sand, and dust to reduce apposition of such foreign matters. As the antifouling liquid, a hydrocarbon-based oil or a silicone-based oil is used.

The hydrocarbon-based oil and silicone-based oil do not contain an ether bond and a halogen element, so that an antifouling property can be expressed over a long term together with the microporous layer.

A fluorine-based oil conventionally used for the antifouling structure has a small surface energy and exhibits excellent antifouling property. However, it generates fluorine radicals when exposed to ultraviolet rays. Further, when metal oxide such as aluminum oxide or iron oxide contained in soil is attached, oxygen of the metal oxide and the fluorine radicals are replaced to produce metal halide such as aluminum fluoride.

The metal halide is strong Lewis acid, and acts as a catalyst that attacks the ether bond included in the molecular structure of the fluorine-based oil to break molecular chains of the fluorine-based oil.

When the molecular chains of the fluorine-based oil are broken and the molecular weight is lowered, the viscosity thereof is reduced so that the fluorine-based oil becomes easily washed away and the durability is deteriorated. In addition, the fluorine-based oil with the broken ether bond has a hydroxyl group at its end and the water repellency is deteriorated, thereby deteriorating the antifouling property.

The present invention uses the hydrocarbon-based oil or the silicone-based oil containing no ether bond and halogen element. Therefore, reduction in the viscosity of the antifouling liquid due to ultraviolet rays such as the sunlight as well as deterioration in the water repellency because of the hydroxyl group can be prevented, so that the antifouling property can be maintained over a long term.

Examples of the antifouling liquid may be aliphatic saturated hydrocarbons with the carbon number of 5 to 15, a dimethyl silicone oil, an alkyl modified silicon oil, and an amide-modified silicon oil.

Further, the viscosity of the antifouling liquid at 20°C is preferable to be 160 $mm^2$/s or less, and more preferable to be 8 to 80 $mm^2$/s.

When the viscosity of the antifouling liquid exceeds 160 $mm^2$/s, the water repellency as well as the antifouling property may be deteriorated even though leakage resistance is increased. When the viscosity is less than 8 $mm^2$/s, the viscosity under high temperatures is reduced so that the leakage resistance may be deteriorated.

Moreover, with respect to the viscosity of the antifouling liquid, it is preferred that the evaporation loss after keeping for 24 hours at 120°C is less than 35 mass%. With the evaporation loss of less than 35 mass%, the antifouling structure exhibiting excellent durability can be obtained.

For example, when used for automotive applications, performance deterioration due to natural evaporation of the antifouling liquid do not easily occur. Therefore, the antifouling property can be exhibited for a long term in the vicinity of normal temperatures (5 to 35°C).

The evaporation loss can be measured and calculated by spreading 30 g of the antifouling liquid in a petri dish of 40 φ and heating it at 120°C for 24 hours.

Base Material

In the antifouling structure of the present invention, the base material can be provided on a face on the opposite side of the liquid retention part of the microporous layer.

As the base material, besides inorganic materials such as glass and a steel sheet, it is possible to use a base material including an organic material such as a resin molded article and a coating film.

Manufacturing Method of Antifouling Structure

As the manufacturing method of the antifouling structure according to the present invention, first, the microporous layer is formed by the sol-gel method. Specifically, a solution containing a constituent material of the microporous layer is converted to a sol by hydrolysis and a polymerization reaction, and applied to the base material and the like, which is further reacted to be converted to a gel, and then dried/calcined to form a microporous layer.

As the method for applying the sol, for example, conventionally known methods such as spin coating, spraying, roll coating, flow coating, and dip coating can be used.

Then, micropores of the microporous layer are modified by a surface modifier, and impregnated with a hydrocarbon-based oil or a silicone-based oil to prepare the antifouling structure.

Automobile Component

The automobile component of the present invention is configured by including the antifouling structure of the present invention. By providing the antifouling structure in the automobile component, the excellent antifouling property can be maintained over a long period so that it is possible to reduce the frequency of car wash and cleaning and to secure a fine visibility in rainy weather and on rough roads.

Examples of the automobile component may be a camera lens, a mirror, a glass window, a painted surface of a body and the like, covers of various kinds of lights, a doorknob, a meter panel, a window panel, a radiator fin, and an evaporator. However, the automobile component is not limited thereto.

EXAMPLES

Hereinafter, Examples of the present invention will be described in more detail.

Example 1 (Preparation of Coating Liquid)

50 mmol of water, 11 mmol of triethylene glycol, and 13 mmol of isopropanol were uniformly mixed, and 0.2 g of 32N sulfuric acid was added to prepare a solution A. Then, 54 mmol of tetraethoxysilane and 13 mmol of isopropanol were mixed to prepare a solution B.

The solution A and the solution B were mixed and stirred for 15 minutes with a stirrer to prepare a sol solution. The sol solution was diluted 5 times with ethanol to prepare a coating solution.

(Coating)

The coating liquid was coated on soda-lime glass by a spin coater (spin speed: 1500 rpm, spin time: 20 seconds, humidity: 60%).

(Calcination)

Within 1 minute after coating, the coated glass plate was put in a dry oven heated to 150°C to be dried for 1 hour, and then left in the dry oven to be cooled down to a room temperature (25°C) for pre-curing.

(Firing)

Thereafter, the pre-cured sample was burned for 1 hour within a muffle furnace heated to 500°C, and then cooled down to a room temperature (25°C) in the muffle furnace to form a microporous layer having a micro uneven structure in which communicated voids are randomly arranged in the three-dimensional directions.

(Forming of Liquid Retention Part)

The soda-lime glass on which the microporous layer is formed was immersed for 48 hours in 3 wt% dodecylsilane solution prepared under the following condition, which was pulled out therefrom and dried for 1 hour in the dry oven heated to 150°C to form the liquid retention part on the surface of the microporous layer.

(Preparation of 3 wt% Dodecylsilane Solution)

30 g of dodecylsilane and 970 g of isopropanol were mixed and 3 g of 98% nitric acid was added thereto, which was heated and refluxed at 83°C for 3 hours and left to be naturally cooled down to a room temperature to prepare a solution.

(Oil Coating)

The weight of a silicone-based oil (dimethyl silicone oil: manufactured by Shin-Etsu Silicone, KF-96, viscosity: 100 cst, surface free energy: 23 mJ/m$^2$) was measured to have the oil film thickness of 500 nm. The silicon-based oil was soaked into BEMKOT, and applied on the microporous layer having the liquid retention part formed therein so as to manufacture a antifouling structure.

Example 2

An antifouling structure was manufactured in the same manner as that of Example 1 except that the condition for spin coating was changed to be at a spin speed of 700 rpm.

Example 3

An antifouling structure was manufactured in the same manner as that of Example 1 except that the coating solution was changed to the following coating solution and the condition for spin coating was changed to be at a spin speed of 500 rpm.

(Coating Solution)

50 mmol of water, 11 mmol of triethylene glycol, and 13 mmol of isopropanol were uniformly mixed, and 1.0 g of 32N sulfuric acid was added to prepare a solution A. Then, 54 mmol of tetraethoxysilane and 13 mmol of isopropanol were mixed to prepare a solution B.
The solution A and the solution B were mixed and stirred for 15 minutes with a stirrer to prepare a sol solution. The sol solution was diluted 5 times with ethanol to prepare a coating solution.

Example 4

An antifouling structure was manufactured in the same manner as that of Example 1 except that the coating solution was changed to the following coating solution.

(Coating Solution)

50 mmol of water, 20 mmol of triethylene glycol, and 13 mmol of isopropanol were uniformly mixed, and 0.2 g of 32N sulfuric acid was added to prepare a solution A. Then, 54 mmol of tetraethoxysilane and 13 mmol of isopropanol were mixed to prepare a solution B.
The solution A and the solution B were mixed and stirred for 15 minutes with a stirrer to prepare a sol solution. The sol solution was diluted 5 times with ethanol to prepare a coating solution.

Comparative Example 1

An antifouling structure was manufactured in the mane manner as that of Example 1 except that the microporous layer was changed to a microporous film (manufactured by 3M Company) and the antifouling liquid was changed to a fluorine-based oil (Krytox GPL 103: manufactured by DuPont Inc.).

| | Opening diameter (nm) | Micropore volume(%) | Film thickn ess (nm) | Liquid retent ion part Surface free energy (mJ/m2) | Surface mod ification dep th (nm) |
|---|---|---|---|---|---|
| | Opening | Micropore | Film thickn | Liquid retent | Surface mod |

Comparative Example 2

An antifouling structure was manufactured in the same manner as that of Example 1 except that the film thickness was changed and no liquid retention part was formed.

Comparative Example 3

An antifouling structure was manufactured in the same manner as that of Example 2 except that the film thickness was changed and the surface modifying time when forming the liquid retention part was changed from 48 hours to 72 hours.
The configurations of the antifouling structures of Examples 1 to 4 and Comparative Examples 1 to 3 are shown in Table 1.

Table 1

|  | diameter (nm) | volume(%) | ess (nm) | ion part Surface free energy (mJ/m2) | ification dep th (nm) |
|---|---|---|---|---|---|
| Example 1 | 55 | 13 | 200 | 23 | 3 |
| Example 2 | 53 | 26 | 300 | 23 | 6 |
| Example 3 | 90 | 22 | 350 | 23 | 5 |
| Example 4 | 40 | 50 | 400 | 23 | 5 |
| Comparative Example 1 | 1000 | 50 | 10000 | 19 | 10000 |
| Comparative Example 2 | 30 | 20 | 100 | N/A | N/A |
| Comparative Example 3 | 45 | 15 | 200 | 11 | 7 |

Table 1(continued)

|  | Liquid extrusion part Surface free energy (mJ/m2) | Liquid retention part / liquid extrusion part | Constituent material of microporous layer |
|---|---|---|---|
| Example 1 | 168 | 3/200 | SiO2 |
| Example 2 | 140 | 6/300 | SiO2 |
| Example 3 | 112 | 5/350 | SiO2 |
| Example 4 | 190 | 5/400 | SiO2 |
| Comparative Example 1 | N/A | 0 | PTFE |
| Comparative Example 2 | 155 | 0 | SiO2 |
| Comparative Example 3 | 164 | 7/200 | SiO2 |

The antifouling structures of Examples 1 to 4 and Comparative Examples 1 to 3 were evaluated with the following methods. The evaluation results are shown in Table 2.

Abrasion Resistance

After reciprocally sliding with a canvas cloth for a prescribed times, droplet sliding angles were measured by using a full-automatic contact angle meter (Drop Master: manufactured by Kyowa Interface Science Co., Ltd.).

Excellent: droplet sliding angle of 20 [μL] of water was 10° or less

Good: droplet sliding angle of 20 [μL] of water was over 10° and 20° or less

Fair: droplet sliding angle of 20 [μL] of water was over 20° and 30° or less

Poor: droplet sliding angle of 20 [μL] of water was over 30°

Weatherability

The antifouling structures were fixed outdoors to be vertical with the ground and facing the south, and left for 2.5 months. Thereafter, the contact angles of water were measured by using a contact angle meter (a solid-liquid interface analyzer "Drop Master 300" manufactured by Kyowa Interface Science Co., Ltd.).

Fine: contact angle of 20 [μL] of water was 90° or more

Poor: contact angle of 20 [μL] of water was less than 90°

Optical Property

Haze values and total light transmittance were measured by using a haze/transmittance meter (a haze meter manufactured by Murakami Color Research Laboratory, Co., Ltd.) by complying with JIS K 7136.

Table 2

| | Abrasion resistance | | Weatherability test Outdoor exposure test | Haze (%) | Total light transmittance (%) |
|---|---|---|---|---|---|
| | 1000 times | 5000 times | | | |
| Example 1 | Excellent | Excellent | Fine | 0.5 | 93 |
| Example 2 | Excellent | Excellent | Fine | 0.6 | 94 |
| Example 3 | Excellent | Excellent | Fine | 0.8 | 92 |
| Example 4 | Excellent | Good | Fine | 0.3 | 93 |
| Comparative Example 1 | Good | Poor | Poor | 80 | 30 |
| Comparative Example 2 | Poor | Poor | Poor | 0.5 | 94 |
| Comparative Example 3 | Good | Fair | Poor | 0.4 | 94 |

From Table 1 and Table 2, it can be seen that the antifouling structures of the present invention are excellent in the abrasion resistance and wetherability. Even though the antifouling structure of Comparative Example 1 has a sufficient micropore volume, it has no liquid extrusion part and exhibits high affinity between the microporous layer and the antifouling liquid. Therefore, the antifouling liquid does not seep out from the interior of the micropores, thereby exhibiting low abrasion resistance.

Further, the antifouling structure of Comparative Example 2 has no liquid retention part, so that the antifouling liquid does not enter the microporous layer. Therefore, the retention amount of the antifouling liquid is small, thereby exhibiting low abrasion resistance.

Furthermore, the antifouling structure of Comparative Example 3 has the liquid retention part, and a better result was obtained in the abrasion resistance compared to those of Comparative Examples 1 and 2 described above. However, since the film thickness of the liquid retention part is large, extrusion of the antifouling liquid by the liquid extrusion part is weak so that the abrasion resistance after sliding of 5,000 times is deteriorated.

While the present invention has been described above in conjunction with Examples, it is to be noted that the present invention is not limited thereto but various modifications are possible within the scope of the gist of the present invention.

REFERENCE SIGNS LIST

1: antifouling structure
2: microporous layer
20: micropore
21: liquid retention part
211: surface modified layer
22: liquid extrusion part
3: antifouling liquid
31: antifouling film
d1 to d3: opening diameter
h: micropore depth
T: liquid extrusion part film thickness
X: liquid retention part film thickness

**Claims**

1. An antifouling structure comprising an antifouling liquid and a microporous layer, the antifouling liquid being retained on a surface and in an interior of the microporous layer, wherein:

   the antifouling liquid is a hydrocarbon-based oil or a silicone-based oil;
   the microporous layer comprises, on the surface side thereof, a liquid retention part retaining the antifouling liquid and, in the interior thereof, a liquid extrusion part exhibiting lower affinity with the antifouling liquid than the liquid retention part;
   wherein an average opening diameter (D) of the microporous layer, determined using a scanning electron microscope, is 10 nm to 400 nm, and
   a film thickness of the liquid retention part is 1/100 to 1/50 of a film thickness of the liquid extrusion part.

2. The antifouling structure according to claim 1, wherein the antifouling liquid is a dimethyl silicone oil or a modified silicon oil.

3. The antifouling structure according to claim 1 or 2, wherein a difference in surface free energies of the liquid retention part and the antifouling liquid is 10 mJ/m$^2$ or less, and a difference in surface free energies of the liquid extrusion part and the antifouling liquid is 30 mJ/m$^2$ or more.

4. The antifouling structure according to any one of claims 1 to 3, wherein a micropore volume of the microporous layer is 5% to 60%.

5. The antifouling structure according to any one of claims 1 to 4, wherein a film thickness of the microporous layer is 50 to 400 nm.

6. An automobile component comprising an antifouling structure, wherein the antifouling structure is the antifouling structure according to any one of claims 1 to 5.

**Patentansprüche**

1. Antifouling-Struktur, die eine Antifouling-Flüssigkeit und eine mikroporöse Schicht aufweist, wobei die Antifouling-Flüssigkeit auf einer Oberfläche und in einem Inneren der mikroporösen Schicht zurückgehalten ist, wobei:

   die Antifouling-Flüssigkeit ein Öl auf Kohlenwasserstoffbasis oder ein Öl auf Silikonbasis ist;
   die mikroporöse Schicht auf ihrer Oberflächenseite einen Flüssigkeitsrückhalteteil, der die Antifouling-Flüssigkeit zurückhält, und in ihrem Inneren einen Flüssigkeitsextrusionsteil aufweist, der eine geringere Affinität zur Antifouling-Flüssigkeit zeigt als der Flüssigkeitsrückhalteteil;

wobei ein durchschnittlicher Öffnungsdurchmesser (D) der mikroporösen Schicht, bestimmt unter Verwendung eines Rasterelektronenmikroskops, 10 nm bis 400 nm beträgt, und

eine Filmdicke des Flüssigkeitsrückhalteteils 1/100 bis 1/50 einer Filmdicke des Flüssigkeitsextrusionsteils beträgt.

2. Antifouling-Struktur nach Anspruch 1, wobei die Antifouling-Flüssigkeit ein Dimethylsilikonöl oder ein modifiziertes Silikonöl ist.

3. Antifouling-Struktur nach Anspruch 1 oder 2, wobei eine Differenz der freien Oberflächenenergien des Flüssigkeitsrückhalteteils und der Antifouling-Flüssigkeit 10 mJ/m$^2$ oder weniger beträgt, und eine Differenz der freien Oberflächenenergien des Flüssigkeitsextrusionsteils und der Antifouling-Flüssigkeit 30 mJ/m$^2$ oder mehr beträgt.

4. Antifouling-Struktur nach einem der Ansprüche 1 bis 3, wobei ein Mikroporenvolumen der mikroporösen Schicht 5 % bis 60 % beträgt.

5. Antifouling-Struktur nach einem der Ansprüche 1 bis 4, wobei eine Filmdicke der mikroporösen Schicht 50 bis 400 nm beträgt.

6. Automobilkomponente, die eine Antifouling-Struktur aufweist, wobei die Antifouling-Struktur die Antifouling-Struktur nach einem der Ansprüche 1 bis 5 ist.

**Revendications**

1. Structure antisalissure comprenant un liquide antisalissure et une couche microporeuse, le liquide antisalissure étant retenu sur une surface et à l'intérieur de la couche microporeuse, dans laquelle :

le liquide antisalissure est une huile à base d'hydrocarbure ou une huile à base de silicone ;
la couche microporeuse comprend, sur le côté de surface de celle-ci, une partie de retenue de liquide retenant le liquide antisalissure et, à l'intérieur de celle-ci, une partie d'extrusion de liquide présentant une affinité avec le liquide antisalissure inférieure à celle de la partie de retenue de liquide ;
dans laquelle un diamètre d'ouverture moyen (D) de la couche microporeuse, déterminé en utilisant un microscope électronique à balayage, est compris entre 10 nm et 400 nm, et
une épaisseur de film de la partie de retenue de liquide représente 1/100 à 1/50 d'une épaisseur de film de la partie d'extrusion de liquide.

2. Structure antisalissure selon la revendication 1, dans laquelle le liquide antisalissure est une huile de silicone diméthylique ou une huile de silicone modifiée.

3. Structure antisalissure selon la revendication 1 ou 2, dans laquelle une différence des énergies libres superficielles de la partie de retenue de liquide et du liquide antisalissure est inférieure ou égale à 10 mJ/m$^2$, et une différence des énergies libres superficielles de la partie d'extrusion de liquide et du liquide antisalissure est supérieure ou égale à 30 mJ/m$^2$.

4. Structure antisalissure selon l'une quelconque des revendications 1 à 3, dans laquelle un volume de micropore de la couche microporeuse est compris entre 5% et 60%.

5. Structure antisalissure selon l'une quelconque des revendications 1 à 4, dans laquelle une épaisseur de film de la couche microporeuse est comprise entre 50 et 400 nm.

6. Composant automobile comprenant une structure antisalissure, dans lequel la structure antisalissure est la structure antisalissure selon l'une quelconque des revendications 1 à 5.

FIG. 1

EP 3 666 517 B1

FIG. 2

**EP 3 666 517 B1**

**Patent documents cited in the description**

- WO 2008120505 A
- WO 2014012052 A1
- JP 2017001363 A
- EP 3470222 A1
- WO 2015155830 A1